**Europäisches Patentamt**

**European Patent Office**

**Office européen des brevets**

(19)

(11) Veröffentlichungsnummer : **0 188 199 B2**

(12) **NEUE EUROPÄISCHE PATENTSCHRIFT**

(45) Veröffentlichungstag der neuen Patentschrift :
14.10.92 Patentblatt 92/42

(51) Int. Cl.⁵ : **B64C 25/60, F16F 9/46**

(21) Anmeldenummer : **86100073.5**

(22) Anmeldetag : **04.01.86**

(54) **Flugzeugfahrwerk.**

(30) Priorität : **12.01.85 DE 3500929**

(43) Veröffentlichungstag der Anmeldung :
**23.07.86 Patentblatt 86/30**

(45) Bekanntmachung des Hinweises auf die
Patenterteilung :
**17.01.90 Patentblatt 90/03**

(45) Bekanntmachung des Hinweises auf die
Entscheidung über den Einspruch :
**14.10.92 Patentblatt 92/42**

(84) Benannte Vertragsstaaten :
**FR GB IT SE**

(56) Entgegenhaltungen :
**EP-A- 0 027 869**
**FR-A- 2 386 427**

(56) Entgegenhaltungen :
**E. Bender:"On the optimization of Vehicle Suspensions using Random Process Theory",ASME publ. 67 TRAN-12, 28.8.67
Viktor Wigotsky, Active landing gear smooths
the ride, in Aerospace America, May 1984, S.
42 bis 44.
Dr. Heinz Schröpl, Teldix Taschenbuch der
Navigation 1979, S. 199- 202**

(73) Patentinhaber : **Deutsche Forschungsanstalt
für Luft- und Raumfahrt e.V.
Linder Höhe Postfach 90 60 58
W-5000 Köln 90 (DE)**

(72) Erfinder : **Freymann, Raymond, Dr.
Tegeler Weg 32
W-3400 Göttingen (DE)**

(74) Vertreter : **Rehberg, Elmar, Dipl.-Ing.
Postfach 3162 Am Kirschberge 22
W-3400 Göttingen (DE)**

EP 0 188 199 B2

**Beschreibung**

Die Erfindung bezieht sich auf ein Flugzeugfahrwerk mit einer federnden und dämpfenden Zylinderanordnung, gemäß dem Oberbegriff von Anspruch 1. Ein derartiges Flugzeugfahrwerk ist durch die FR-A-2 386 427 bekannt.

Bei diesem Flugzeugfahrwerk ist die Zusatzkammer mit dem ersten Arbeitsraum verbunden, so daß das Luftpolster in dem zweiten Arbeitsraum durch die Betätigung des Servoventils nur über die Drossel beeinflußt wird.

Die Erfindung ist auf ein Flugzeugfahrwerk gerichtet, welches die Abminderung der Schwingungsbewegungen des Flugzeuges beim Rollen auf einer auch unebenen Fahrbahn ermöglichen soll. Da insbes. Kampfflugzeuge auch von nur notdürftig angelegten Fahrbahnen mit entsprechenden Unebenheiten aus operieren müssen, entstehen in den Start- und Landephasen an der Flugzeugzelle und am Fahrwerk erhebliche Belastungen, die u. U. zur strukturellen Zerstörung des Flugzeuges führen können.

Die bisher bekannten Flugzeugfahrwerke weisen eine Zylinderanordnung auf, deren beide mit Hydraulikmedium gefüllte Arbeitsräume über eine Drossel miteinander verbunden sind.

Der erste Arbeitsraum ist mit der ungefederten Masse des Fahrwerks verbunden, während der zweite Arbeitsraum auf der Seite der Flugzeugzelle vorgesehen ist.

Der Arbeitsraum, der auf der Seite der Flugzeugzelle angeordnet ist, schließt gleichzeitig ein Luftpolster ein, so daß sich insgesamt die federnde und die dämpfende Funktion des Fahrwerks ergibt. Diese bekannten Flugzeugfahrwerke werden heute ausschließlich nach den beim Landestoß auftretenden Belastungen ausgelegt, d. h. man geht davon aus, daß der Landestoß die größte Belastung darstellt und damit die Kräfte beim Rollen auf einer vergleichsweise ebenen Ladepiste ohnehin aufgenommen werden können. Der Problematik im Zusammenhang mit dem dynamischen strukturellen Verhalten des Flugzeugs beim Rollen auf unebener Fahrbahn wird somit keine gesonderte Beachtung geschenkt.

Es ist natürlich möglich, Fahrwerke verstärkt auszubilden, also entsprechend den beim Landestoß auftretenden Kräften so zu dimensionieren, daß dabei höhere Belastungen aufgenommen werden können. Eine soche Verstärkung des Fahrwerks hat jedoch den Nachteil, daß damit immer auch eine Erhöhung des Strukturgewichts verbunden ist. Dies wirkt sich negativ auf die Flugleistungen und insbesondere den Treibstoffbedarf des Flugzeugs aus. Andererseits ist es auch möglich, den mechanischen Aufbau des Fahrwerks derart zu ändern, daß das Fahrwerk bessere Dämpfungs- und/oder Federungseigenschaften aufweist. Solchen rein mechanischen Konstruktionsänderungen am Fahrwerk zur Dämpfungserhöhung sind jedoch Grenzen gesetz. Auch wenn sich eine Erhöhung der Fahrwerkdämpfung günstig auf die dynamischen strukturellen Belastungen beim Rollen auf unebener Fahrbahn auswirkt, so können dadurch jedoch unzulässig hohe Belastungen beim Landestoß auftreten.

Der Erfindung liegt die Aufgabe zugrunde, ein Flugzeugfahrwerk der eingangs beschriebenen Art derart weiterzubilden, daß die dynamischen Belastungen am Fahrwerk und an der Flugzeugzelle beim Rollen auch auf unebener Fahrbahn vermindert werden. Das Fahrwerk muß darüberhinaus natürlich geeignet sein, die Belastung beim Landestoß auch aufzunehmen.

Erfindungsgemäß wird dies durch die im Anspruch 1 angegebenen Merkmale erreicht.

Damit wird im Gegensatz zu den bisher bekannten passiven Fahrwerken ein aktiv geregeltes Flugzeugfahrwerk geschaffen, welches es ermöglicht, durch Rückführung der Geschwindigkeit der Flugzeugbewegungen, die Schwingungsbewegungen und strukturellen Belastungen der Flugzeuges beim Rollen auf der Landebahn zu vermindern. Durch das Zuführen oder Ablassen von Hydraulikmedium in die Zusatzkammer wird das im Fahrwerk enthaltene Luftpolster komprimiert oder expandiert. Dadurch lassen sich im Fahrwerk Kräfte erzeugen, die im Falle einer zeitlichen Phasenverschiebung von 90° relativ zur Fahrwerksbewegung - also in Phase mit der Geschwindigkeit der Schwingungsbewegung - als Dämpfungskräfte wirken und demzufolge die Schwingungsbewegungen mindern. Zur gezielten Erzeugung dieser Dämpfungskräfte muß somit das Fahrwerk in einem Regelkreis arbeiten. Hierzu gehören ein oder mehrere Sensoren, die entweder die Geschwindigkeit des Flugzeuges in den verschiedenen Bewegungsrichtungen oder aber die Beschleuniung des Flugzeuges messen. Die Erfindung läßt sich an dem Gesamtfahrwerk eines Flugzeuges einsetzen, kann aber auch gezielt an jeder einzelnen Fahrwerkseinheit benutzt werden. So ist es auch möglich, die Erfindung ganz gezielt für spezielle Bewegungen einzusetzen: Durch Rückführung der Vertikalgeschwindigkeit des Flugzeugschwerpunktes - über ein Kompensationsnetzwerk auf die Servoventile der Zylinderanordnung des Hauptfahrwerkes kann die Vertikalschwingungbewegung des rollenden Flugzeuges gedämpft werden. Durch Rückführung der Nickgeschwindigkeit des Flugzeuges - über ein Kompensationsnetzwerk - auf das Servoventil des Bugfahrwerks kann die Nickbewegung des rollenden Fahrzeuges gedämpft werden. Durch Rückführung der Rollgeschwindigkeit des Flugzeuges - über ein Kompensationsnetzwerk - auf die Servoventile der Zylinder des Hauptfahrwerks kann die Rollbewegung des rollenden Flugzeuges dynamisch gedämpft werden. Das neu entwickelte Flugzeugfahrwerk weist beim Landestoß ähnliche Dämpfungseigenschaften wie ein konventionelles Flugzeugfahrwerf auf. Durch die Einführung dieser aktiven Regelung können die Schwingungsbewegungen des Flugzeuges und damit die strukturellen Belastungen beim Rollen auch auf unebener Fahrbahn gemindert werden, ohne die strukturellen Belastungen beim Landestoß im Vergleich zu einem konventionellen Fahrwerk - zu erhöhen. Weiterhin ist vorteilhaft, daß mit dieser aktiven Regelung neben den Starrkörperbewegungen des Flugzeuges auch höherfrequente Schwingungsbewegungen des elastischen Flugzeuges beim Rollen auf unebener Fahrbahn gemindert werden.

Die Zusatzkammer kann auch mit dem einen Arbeitsraum der Zylinderanordnung baulich vereinigt sein. Dies hat den Vorteil, daß sich die Bauhöhe des Flugzeugfahrwerks gegenüber bekannten Fahrwerken nicht erhöht. Damit kann eine gleiche dämpfende Wirkung wie bei getrennter Anordnung der Zusatzkammer erzielt werden. Auch hierbei ist es erfordelich, das Luftpolster von der zusatzkammer durch eine bewegliche Wand zu trennen.

Das Kompensationsnetzwerk des Regelkreises zwischen dem Sensor und der Zusatzkammer kann je nach Sensorbauart einen Integrator aufweisen, um insbes. die von einem als Beschleunigungsnehmer ausgebildeten Sensor aufgenommenen Beschleunigungen zu intergrieren. Die bewegliche Wand kann zweckmäßig als Membran aus einem elastischen Werkstoff, z. B. Gummi, ausgebildet sein.

Für die Festlegung des stationären Arbeitspunktes kann eine zusätzliche Regelschleite mit Druckgeber und PID- Regler vorgesehen sein, die den Druck in der Zusatzkammer festlegt. Damit ist die statische Regelung des Fahrwerks möglich. Der Druck in der Zusatzkammer wird als statische Regelgröße benutzt.

Es können auch mehrere Sensoren - insbes. Beschleunigungsaufnehmer - auf dem Flugzeug verteilt angeordnet sein, deren Signale nach Überlagerung den einzelnen Einheiten des Fahrwerkes zugeführt werden. Mit einer solchen aktiven Regelung können somit nicht nur die Starrkörperfreiheitsgrade (Vertikalbewegung, Nicken, Rollen) des auf der Landebahn rollenden Fahrzeuges gedämpft werden. Es is auch möglich, sehr gezielt auf höherfrequente Eigenschwingungsformen des elastischen Flugzeuges dämpfend einzuwirken. Die elektrischen Signale der Sensoren werden dabei entsprechen überlagert und über ein elektronisches Kompensationsnetzwerk den elektrohydraulischen Servoventilen der einzelnen Einheiten des Fahrwerks als Stellgröße zugeführt.

Die Erfindung wird anhand der Zeichnungen weiter verdeutlicht und beschrieben. Es zeigt:

Fig. 1 die schematische Darstellung der wesentlichen Teile eines passiven Flugzeugfahrwerks gemäß dem Stand der Technik,

Fig. 2 die schematische Darstellung des erfindungsgemäßen aktiv geregelten Flugzeugfahrwerks in einer ersten Ausführungsform,

Fig. 3 die schematische Darstellung des erfindungsgemäßen aktiv geregelten Flugzeugfahrwerks in einer zweiten Ausführungsform,

Fig. 4 die Darstellung des Funktionsprinzips des aktiv geregelten Flugzeugfahrwerks,

Fig. 5 die Darstellung der Kräfte zwischen Fahrwerk und Flugzeugzelle,

Fig. 6 weitere Einzelheiten des Regelkreises des Flugzeugfahrwerks,

Fig. 7 die Verdeutlichung verschiedener Regelkreise zur aktiven Dämpfung der Flugzeugbewegungen,

Fig. 8 die Weiterbildung des aktiv geregelten Fahrzeugs mit zusätzlicher statischer Regelung,

Fig. 9 den Frequenzgang des Nickwinkels,

Fig. 10 den Frequenzgang der Vertikalbewegung der dynamischen Antwort des Flugzeuges bei offenem und geschlossenem Regelkreis,

Fig. 11 die Nyquist-Orstkurve für den offenen Regelkreis zum Dämpfen der Vertikalbewegung,

Fig. 12 den Frequenzgang des Nickwinkels,

Fig. 13 den Frequenzgang der Vertikalbewegung der dynamischen Antwort des Flugzeuges bei offenem und geschlossenem Regelkreis bzgl. der Dämpfung der Nickbewegung,

Fig. 14 die Nyquist-Ortskurve für den offenen Regelkreis zum Dämpfen der Nickbewegung,

Fig. 15 den Frequenzgang des Nickwinkels und

Fig. 16 den Frequenzgang der Vertikalbewegung der dynamischen Antwort des Flugzeuges bei offenen und geschlossenen Regelkreisen hinsichtlich der Dämpfung der Vertikalund der Nickbewegung.

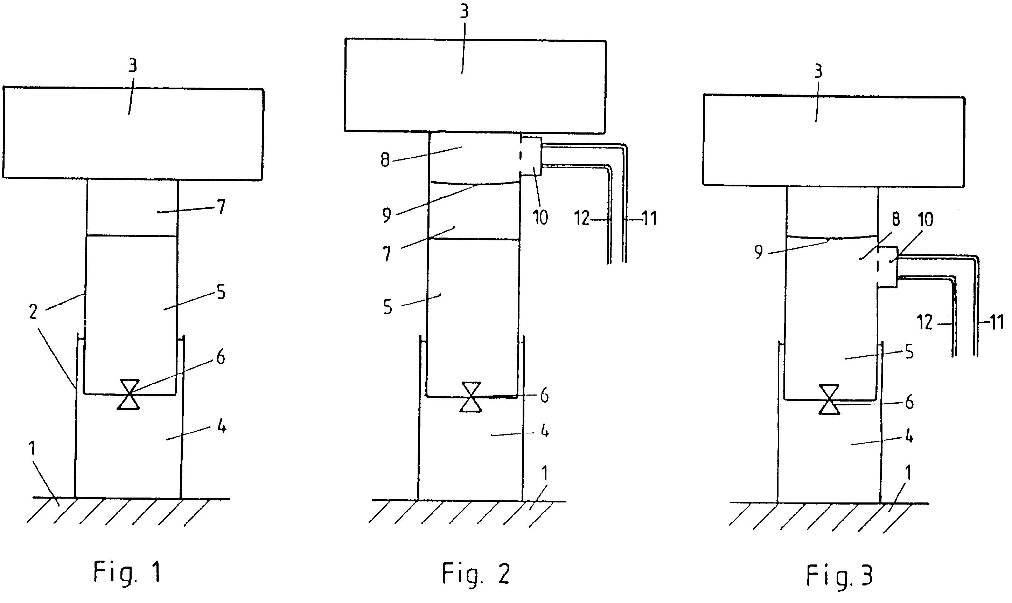

In Fig. 1 ist ein konventionelles Fahrwerk schematisch mit den im vorliegenden Zusammenhang wesentlichen Teilen dargestellt. Auf der Landebahn 1 ist das Fahrwerk 2 mit der Flugzeugszelle 3 dargestellt, die als Flugzeugmasse symbolisch wiedergegeben ist. Es ist eine Zylinderanordnung mit zwei Arbeitsräumen 4 und 5 in der dargestellten Weise vorgesehen, die miteinander über eine Drossel 6 in Verbindung stehen. Beide Arbeiträume 4 und 5 sind mit Hydraulikmedium gefüllt. Oberhalb des Arbeitsraumes 5 und in diesen eingeschlossen befindet sich ein Luftpolster 7. Nach diesem Prinzip sind die bekannten Fahrwerke aufgebaut.

Fig. 2 zeigt eine erste Ausführungsform der Erfindung, ähnlichschematisiert wie Fig. 1. Zusätzlich ist eine Zusatzkammer 8 vorgesehen, die über eine bewegliche Wand 9 mit dem Luftpolster 7 des Arbeitsraumes 5 in Wirkverbindung steht. Andererseits ist die Zusatzkammer 8 über ein Servoventil 10 an einer nicht dargestellten Druckquelle für Hydraulikmekium verbunden. Es ist eine Zuleitung 11 und eine Ableitung 12 vorgesehen, die beide zu der Druckquelle führen.

Fig. 3 verdeutlicht eine alternative Ausführungsform, bei der die Zusatzkammer 8 und der Arbeitsraum 5 baulich vereinigt sind. Diese Bauart hat den Vorteil einer geringeren Höhe des Fahrwerks.

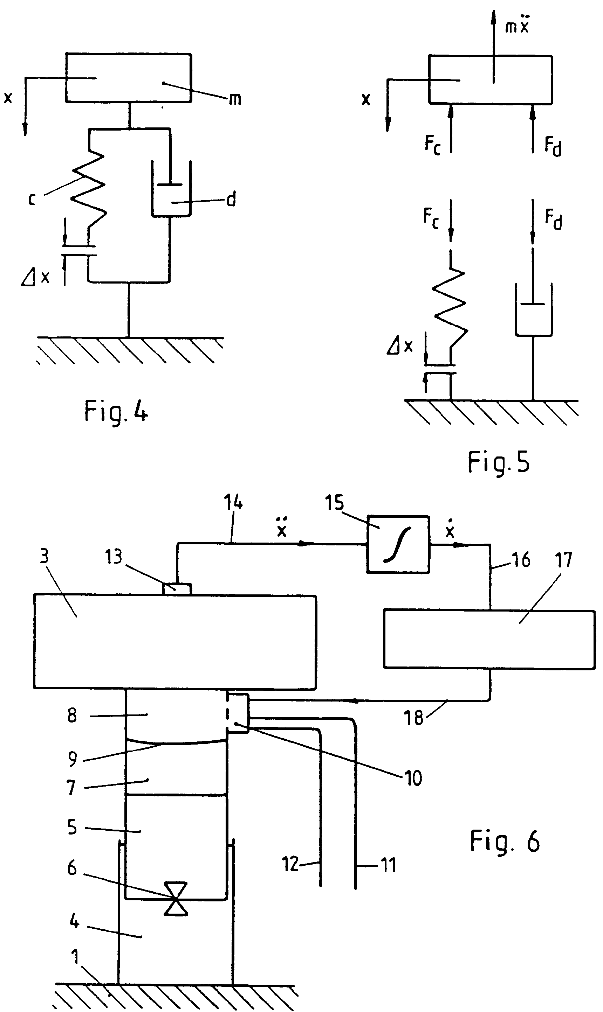

Die Fig. 4 und 5 verdeutlichen das Funktionsprinzip. Die Masse m der Flugzeugzelle 3 bewegt sich in x -Richtung, also federt gleichsam auf dem Fahrwerk ein. Schematisch ist die Dämpfungskonstante d des passiven Fahrwerks und die Dämpfungskonstante (d + c a) des aktiven Fahrwerks verdeutlicht, wobei ein Faktor a benutzt ist, der sich aus der Gleichung

$$x = a \cdot \dot{x}$$

ergibt. Die Bewegungsgleichungen

$$m\ddot{x} + F_d + F_c = 0 \qquad (1)$$

$$\text{mit } F_d = d \cdot \dot{x} \quad (2)$$
$$\text{und } F_c = C \cdot (x + \Delta x) \quad (3)$$

ergeben durch Einsetzen der Gleichungen (2) und (3) in die Gleichung (1) mit $\Delta x = a \cdot \dot{x}$

$$m\ddot{x} + (d + ca)\dot{x} + cx = 0$$

Mit $\Delta x$ ist ein Bewegungselement in x-Richtung bezeichnet. Fig. 5 läßt durch die aufgeschnittene Darstellung die Kräfte $F_d$ und $F_c$ erkennen.

In Fig. 6 sind weitere Einzelheiten dargestellt. Im Bereich der Flugzeugzelle 3 ist ein Sensor 13 als Beschleunigungsaufnehmer angebracht, der das elektrische Signal $\ddot{x}$ abgibt, welches über eine Leitung 14 zu einem Integrator gelangt, der über eine Leitung 16 mit einem Kompensationsnetzwerk 17 verbunden ist. Die Leitung 16 führt das Signal $\dot{x}$. Eine Leitung 18 verbindet das Kompensationsnetzwerk 17 mit dem elektrohydraulischen Servoventil 10. In den Fig. 4 bis 6 ist für den Fall eines Ein-Massen-Schwingers das Funktionsprinzip und der Aufbau des Reglersystems beispielhaft dargestellt. Mit Hilfe des als Beschleunigungsaufnehmer ausgebildeten Sensors 13 wird die Beschleunigung der Masse, die das Fahrwerk belastet, ermittelt. Das integrierte Beschleunigungssignal, welches in Phase mit der Bewegungsgeschwindigkeit der Masse ist, wird einem elektronischen Kompensationsnetzwerk 17 zugeführt. Dort wird es verstärkt und falls erforderlich gefiltert. Mit dem elektrischen Ausgangssignal des Kompensationsnetzwerkes wird das elektrohydraulische Servoventil 10 angesteuert. Dieses Ventil reguliert den Zu- und Abfluß des Hydraulikmediums in die Zusatzkammer 8 des Fahrwerks. Dieser Strom des hydraulischen Mediums wiederum bewirkt das Komprimieren oder Expandieren des im Fahrwerk eingeschlossenen Luftpolsters 7, wodurch die Dämpfungskräfte erzeugt werden.

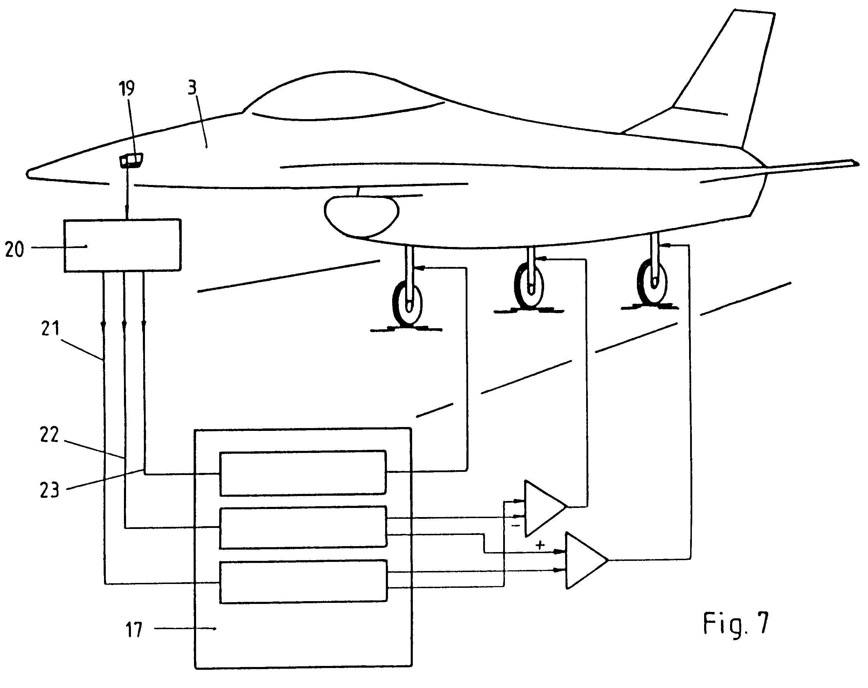

Fig. 7 zeigt übersichtlich die Funktion von drei Regelungen, nämlich der Rückführung der Vertikalgeschwindigkeit, der Rückführung der Rollgeschwindigkeit und der Rückführung der Nickgeschwindigkeit.

Die Flugzeugzelle 3 weist eine Trägheitsplattform 19 auf, die in Verbindung mit einem Bordrechner 20 steht. Von diesem führen eine Leitung 21 für die Vertikalgeschwindigkeit des Schwerpunktes, eine Leitung 22 für die Rollgeschwindigkeit und eine Leitung 23 für die Nickgeschwindigkeit zu dem Kompensationsnetzwerk 17 und von dort in der dargestellten Weise zu den einzelnen Einheiten des Gesamtfahrwerks.

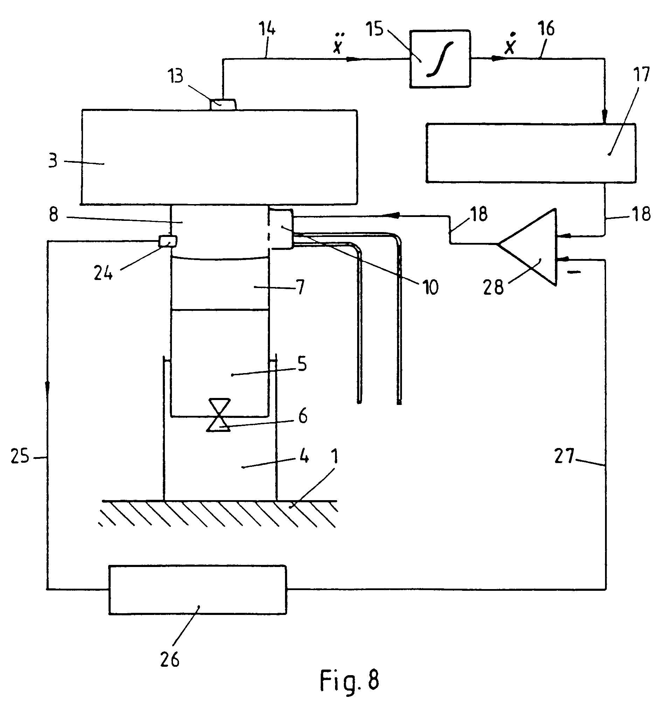

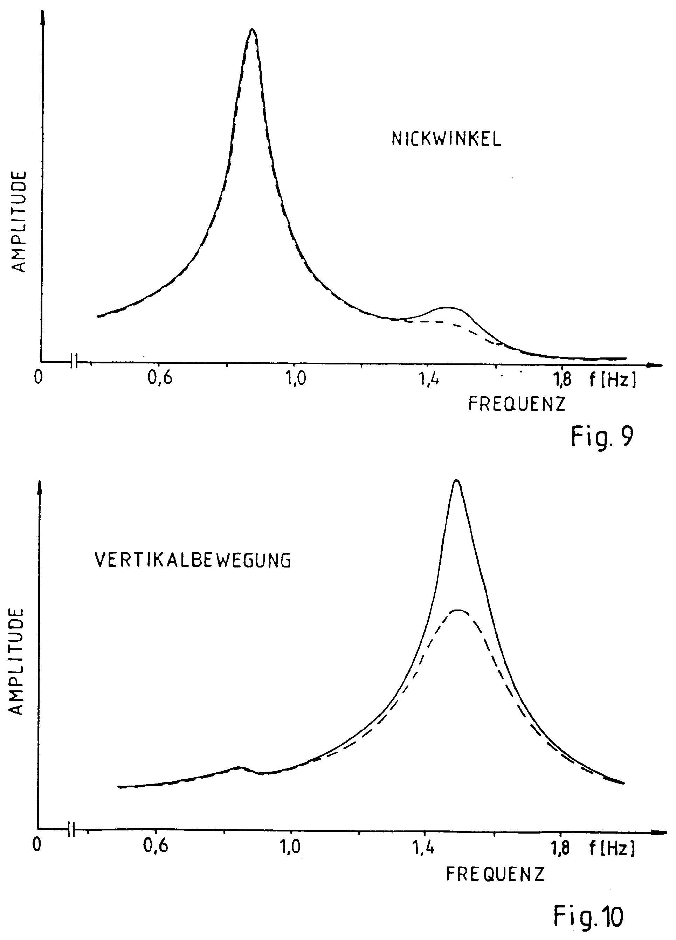

Fig. 8 verdeutlicht die zusätzliche Regelschleife für die statische Regelung des Fahrzeuges. Es ist hier ein Druckgeber 24 an der Zusatzkammer 8 vorgesehen, von dem eine Leitung 25 zu einem PID-Regler 26 führt, von welchem eine Leitung 27 zu einem Subtraktionsglied 28 führt, welches in die Leitung 18 eingeschaltet ist, die das Konpensationsnetzwerk 17 mit dem elektrohydraulischen Servoventil verbindet. Auf diese Art und Weise kann der Druck P in der Zusatzkammer 8 als statische Regelgröße dazu benutzt werden, um den stationären Arbeitspunkt festzulegen, also die statische Regelung des Fahrwerks zu erreichen. Die Fig. 9 bis 16 zeigen jeweils einander zugehörige und zugeordnete Diagramme der Amplitude der verschiedenen Bewegungen über der Frequenz. Mit Hilfe eines Rechenprogramms wurde - für ein idealisiertes mathematisches Flugzeugmodell die dynamische Antwort auf eine äußere harmonische Erregung des Fahrwerks ermittelt. Die in Form von Frequenzgangkurven aufgetragenen Ergebnisse zeigen, daß - jeweils für eine gleiche Anregung des Fahrwerks - die Schwingungsbewegungen des Flugzeugs mit aktivem Fahrwerk erheblich kleiner als im Falle des Flugzeugs min konventionellem Fahrwerk sind.

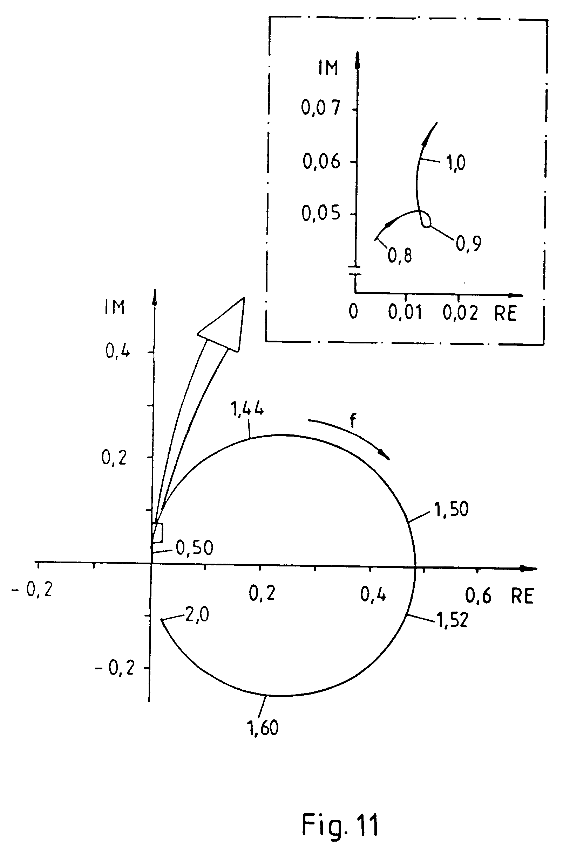

Die Fig. 9 und 10 zeigen Rechenergebnisse für den Fall, daß nur der auf die Hauptfahrwerke wirkende Regelkreis zur Dämpfung der Vertikalbewegung (Fig. 7) geschlossen (d. h. aktiv) ist. Die durchgezogene Linie zeigt das ungeregelte, die gestrichelte Linie das geregelte Verhalten. Die in Fig. 11 dargestellte Nyquist-Ortskurve für den offenen Regelkreis weist auf die gute Stabilität des geschlossenen Regelkreises hin; der Punkt (-1.0, i 0) wird nicht umschlossen.

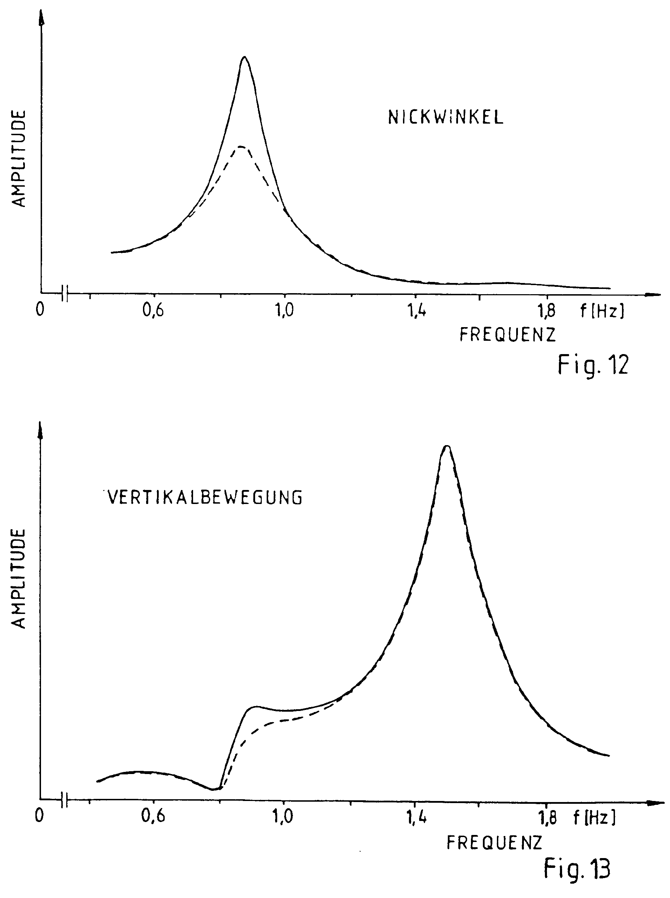

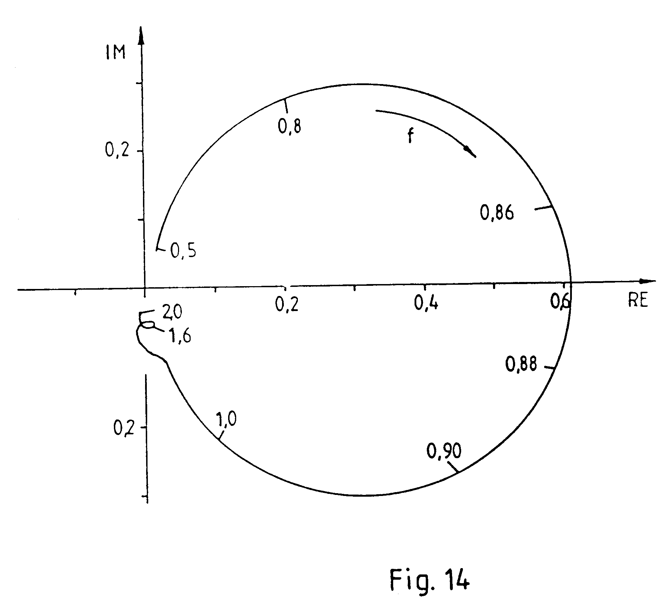

Die Fig. 12 und 13 zeigen Rechenergebnisse für den Fall, daß nur der auf das Bugfahrwerk wirkende Regelkreis zur Dämpfung der Nickbewegung geschlossen ist (Fig. 7). Die in Fig. 14 dargestellte Ortskurve für den offenen Regelkreis verdeutlicht die gute Stabilität des geschlossenen Regelkreises.

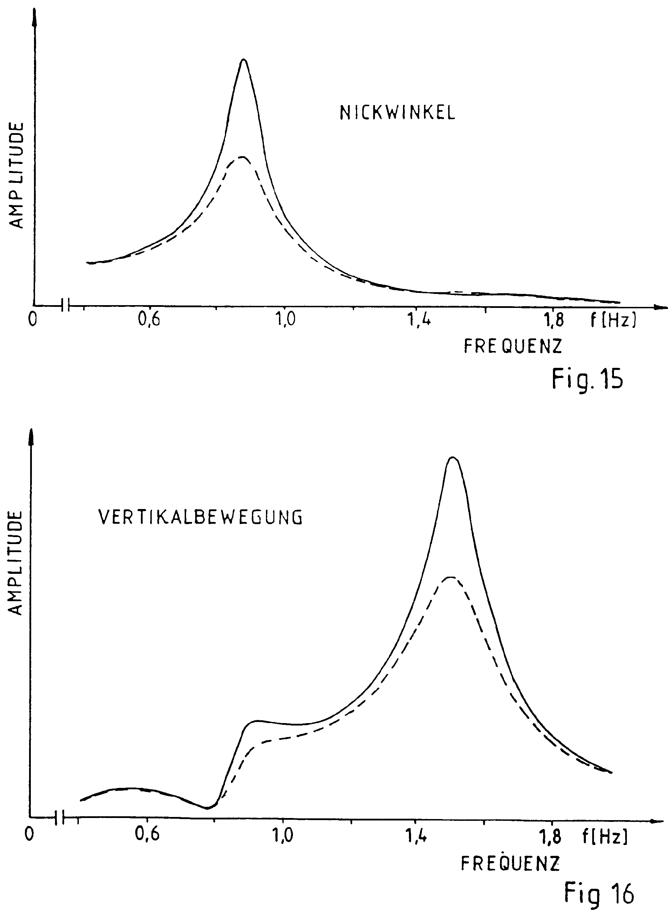

Die Fig. 15 und 16 zeigen Rechenergebnisse für den Fall, daß beide Regelkreise - zum Dämpfen der Vertikalbewegung und der Nickbewegung - geschlossen sind. Die in diese Figur aufgetragenen Frequenzgangkurven zeigen - welch enorme Verbesserungen im Schwingungsverhalten durch die Integration eines aktiven Fahrwerks erzielt werden können.

Die hier aufgeführten Verbesserungen sind typisch für den Fall von Kampfflugzeugen. Der zur Regelung erforderliche Bedarf an Hochdruckhydrauliköl (ca. 30l/min) kann während der Rollphase des Flugzeugs problemlos von den flugzeugeigenen Hydraulikpumpen geliefert werden. Für den Fall, daß ein höherer Ölstrom zur Verfügung steht, ist eine weitere Verbesserung der aufgeführten Ergebnisse möglich.

Bezugszeichenliste:

1 = Landebahn
2 = Fahrwerk
3 = Flugzeugzelle
4 = Arbeitsraum
5 = Arbeitsraum
6 = Drossel
7 = Luftpolster
8 = Zusatzkammer
9 = bewegliche Wand
10 = Servoventil
11 = Zuleitung
12 = Ableitung
13 = Sensor
14 = Leitung
15 = Integrator
16 = Leitung
17 = Kompensationsnetzwerk
18 = Leitung
19 = Trägheitsplattform
20 = Bordrechner
21 = Leitung
22 = Leitung
23 = Leitung
24 = Druckgeber
25 = Leitung
26 = PID-Regler
27 = Leitung
28 = Subtraktionsglied

**Patentansprüche**

1. Aktiv geregeltes Flugzeugfahrwerk mit einer federnden und dämpfenden Zylinderanordnung, die einen ersten mit Hydraulikmedium gefüllten Arbeitsraum und einen zweiten, ein Luftpolster einschließenden, mit Hydraulikmedium gefüllten Arbeitsraum sowie eine von dem Luftpolster getrennte Zusatzkammer für Hydraulikmedium aufweist, wobei die beiden Arbeitsräume über eine Drossel miteinander verbunden sind, mit einem Servoventil zum Zuführen oder Ablassen von Hydraulikmedium von einer Druckquelle in die Zusatzkammer und mit einer den Druck in der Zusatzkammer bestimmenden Regelschleife, dadurch gekennzeichnet, daß die Zusatzkammer (8) mit dem Luftpolster (7) des zweiten Arbeitsraums (5) in Wirkverbindung steht, daß entweder ein Sensor (13) zum Messen der Beschleunigung des Flugzeugs im Schwerpunkt mit nachgeschaltetem Integrator (15) oder zum Messen der Geschwindigung des Flugzeugs im Schwerpunkt vorgesehen ist, der über ein Kompensationsnetzwerk (17) das Servoventil (10) im Sinne einer zusätzlichen Dämpfung der Schwingungsbewegungen des Flugzeugs beim Rollen auf einer Landebahn (1) ausregelt.

2. Aktiv geregeltes Flugzeugfahrwerk nach Anspruch 1, dadurch gekennzeichnet, daß zur zusätzlichen Dämpfung des Bewegung des starren Flugzeugs ein erster Sensor (13) zur Ermittlung der Vertikalgeschwindigkeit des Flugzeugschwerpunkts zur Aussteuerung der Servoventilen (10) der Hauptfahrwerke und ein zweiter Sensor (13) zur Ermittlung der Nickgeschwindigkeit zur Aussteuerung des Servoventils (10) am Bugfahrwerk und ein dritter Sensor (13) zur Ermittlung der Rollgeschwindigkeit des Flugzeugs zur Ansteuerung der Servoventile (10) der Hauptfahrwerke vorgesehen sind.

3. Aktiv geregeltes Flugzeugfahrwerk nach Anspruch 1 oder 2, dadurch gekennzeichnet, daß zur zusätzlichen Dämpfung von Schwingungsbewegungen des elastischen Flugzeugs mehrere Sensoren - insbesondere Beschleunigungsaufnehmer - auf dem Flugzeug verteilt angeordnet sind, deren Signale nach Überlagerung den einzelnen Servoventilen (10) der einzelnen Fahrwerke zugeführt werden.

**Claims**

1. Actively controlled aircraft undercarriage with a resilient and absorbent cylinder arrangement, which has a first working space, filled with hydraulic medium, and a second working space, enclosing an air cushion and filled with hydraulic medium, as well as an auxiliary chamber for hydraulic medium, separate from the air cushion, the two working spaces being joined to each other via a throttle, with a servovalve for the feeding or draining of hydraulic medium from a pressure source into the auxiliary chamber and with a control loop determining the pressure in the auxiliary chamber, characterised in that the auxiliary chamber (8) is in effective connection with the air cushion (7) of the second working space (5), in that either a sensor (13) for measuring the acceleration of the aircraft at the centre of gravity, with downstream integrator (15), or for measuring the speed of the aircraft at the centre of gravity is provided, which sensor corrects the servovalve (10) via a compensation network (17) in the sense of an additional absorption of the oscillatory motions of the aircraft when rolling on a runway (1).

2. Actively controlled aircraft undercarriage according to Claim 1, characterised in that, for the additional absorption of the motion of the rigid aircraft, a first sensor (13) is provided for determination of the vertical velocity of the centre of gravity of the aircraft for controlling the servovalves (10) of the main undercarriages and a second sensor (13) is provided for determination of the pitching speed for controlling the servovalve (10) on the nose undercarriage and a third sensor (13) is provided for determination of the rolling speed of the aircraft for actuating the servovalves (10) of the main undercarriages.

3. Actively controlled aircraft undercarriage according to Claim 1 or 2, characterised in that, for the additional absorption of oscillatory motions of the elastic aircraft, a plurality of sensors - in particular acceleration pickups - are arranged in a distributed manner on the aircraft, the signals of which sensors are fed to the individual servovalves (10) of the individual undercarriages after superimposition.

**Revendications**

1. Train d'atterrissage d'avion à régulation active, avec un système de vérins de suspension et d'amortissement présentant une première chambre de travail remplie de fluide hydraulique et une deuxième chambre de travail renfermant un coussin d'air et remplie de fluide hydraulique, ainsi qu'une chambre supplémentaire, séparée du coussin d'air, pour du fluide hydraulique, les deux chambres de travail étant reliées l'une à l'autre par un étranglement, avec une servo-vanne pour l'admission ou la décharge de fluide hydraulique venant d'une source de pression bans la chambre supplémentaire, et avec un circuit de régulation déterminant la pression dans la chambre supplémentaire, **caractérisé** en ce que la chambre supplémentaire (8) est en liaison active avec le coussin d'air (7) de la deuxième chambre de travail (5), en ce qu'il est prévu un capteur (13), soit pour mesurer l'accélération de l'avion en son centre de gravité, avec un intégrateur (15) branché à la suite, soit pour mesurer la vitesse de l'avion en son centre de gravité, qui règle, par l'intermédiaire d'un réseau de compensation (17), la servo-vanne (10) dans le sens d'un amortissement supplémentaire des mouvements vibratoires de l'avion lors du roulement sur une piste d'atterrissage (1).

2. Train d'atterrissage d'avion à régulation active, selon la revendication 1, caractérisé en ce que, pour l'amortissement supplémentaire du mouvement de l'avion considéré comme un corps rigide, il est prévu un premier capteur (13) pour la détermination de la vitesse verticale du centre de gravité de l'avion pour commander les servo-vannes (10) des roues principales de l'atterrisseur, un deuxième capteur (13) pour la mesure de la vitesse de tangage pour commander la servo-vanne (10) de la roue avant, et un troisième capteur (13) pour mesurer la vitesse de roulis de l'avion pour commander les servo-vannes (10) du train d'atterrissage principal.

3. Train d'atterrissage d'avion à régulation active, selon la revendication 1 ou 2, caractérisé en ce que, pour l'amortissement supplémentaire des mouvements vibratoires de l'avion considéré comme corps élastique, plusieurs capteurs - en particulier des accéléromètres - sont répartis sur l'avion, dont les signaux sont transmis, après superposition, aux servo-vannes individuelles (10) de chaque jambe du train d'atterrissage.

Fig. 1

Fig. 2

Fig. 3

Fig.4

Fig.5

Fig. 6

Fig. 7

EP 0 188 199 B2

Fig. 8

Fig. 9

Fig. 10

Fig. 11

Fig. 12

Fig. 13

Fig. 14

NICKWINKEL

AMPLITUDE

FREQUENZ

Fig. 15

VERTIKALBEWEGUNG

AMPLITUDE

FREQUENZ

Fig 16